# FASCICULE DE BREVET EUROPEEN

(11) **EP 0 329 496 B1**
(45) Date de publication et mention de la délivrance du brevet: **13.01.1993**
(21) Numéro de dépôt: 89400124.7
(22) Date de dépôt: 17.01.1989
(51) Int. Cl.: B65D 81/06, B65B 55/20

(54) **Cale de conditionnement, conteneur pour une telle cale et procédé d'emballage mettant en oeuvre une telle cale**
Verpackungseinlage, Behälter für eine solche Einlage und Verfahren zum Verpacken unter Verwendung einer solchen Einlage
Packaging bolster, container for such bolster and method of packing using such bolster

(30) Priorité: 26.01.1988 FR 8800879
(43) Date de publication de la demande: 23.08.1989
(73) Titulaire: BULL S.A., 92800 Puteaux (FR)
(72) Inventeur: Vilas Boas Jean-Claude, F-95110 Vannois (FR)
(74) Mandataire: Debay, Yves

(56) Documents cités:
- DE-U- 8 610 983
- GB-A- 2 149 753
- US-A- 3 204 385

## Description

La présente invention concerne une câle de conditionnement et un conteneur pour une telle câle. Elle concerne aussi un procédé d'emballage mettant en oeuvre un telle câle. Elle trouve application dans le domaine de l'emballage et du conditionnement d'objets solides, mais fragiles, destinés à être stockés et transportés.

Dans l'art antérieur, on connaît des câles de conditionnement qui s'interposent entre le produit emballé et la caisse destinée à le contenir (voir p.e.DE-U-7825628). Selon les pratiques courantes, l'homme de métier sait disposer des câles d'angle qui permettent d'amortir les accélérations trop brusques (chocs principalement) et d'écarter le produit emballé de son contenant. De telles câles sont réalisées en matériaux synthétiques comme du polystyrène. Les câles de coins présentent le premier inconvénient de réclamer une mise en place longue et pratiquement pas automatisable.

Une autre solution qui améliore le calage, et surtout la manipulation des câles, propose des demies-coques en matériau plastique dont la forme est entièrment enveloppante et est plus facilement manipulable. Cependant, lors de l'introduction dans la caisse, il faut tenir les coques par l'extrémité libre et elles ont tendance à s'écarter du produit à caler et en cas extréme, à le laisser échapper.

Un inconvénient commun aux deux solutions antérieures est d'exiger des volumes considérables de stockage avant l'usage. Les câles en effet, restent en entrepôt avant de passer sur la chaîne de transfert, et le volume qu'elles occupent est perdu pour le reste de l'activité de l'entreprise.

La présente invention permet de porter remède à ces inconvénients de l'art antérieur. Elle se pose comme premier but, de réduire le volume de stockage en entrepôt avant l'utilisation sur la chaîne de transfert.

Un second but de la présente invention est de permettre de rendre l'emballage presque entièrement automatique, évitant ainsi d'une part le recours à des manipulations humaines, d'autre part les risques d'erreurs de manipulations coûteuses.

A ces fins, l'invention concerne une cale de conditionnement destinée à être introduite dans un emballage pour protéger un produit à emballer. Elle se caractérise principalement par le fait qu'elle est réalisée d'une seule pièce en un matériau plastique sous forme d'une bande continue, qui peut être coupée à la dimension nécessaire pour entourer au moins partiellement le produit. De plus, tout le long de la cale elle comporte une gorge en forme de U destinée à recevoir et à maintenir le produit.

L'invention concerne aussi un moyen de stockage d'une cale conçue selon ce qui a été décrit plus haut. Un tel moyen comprend un organe de compression et de déroulement d'une longueur de cale à la demande, le reste de la cale restant sous forme comprimée afin de limiter le volume de stockage.

L'invention concerne aussi un procédé d'emballage automatique qui se caractérise par le fait que la cale est disposée au-dessus de la caisse, tirée puis coupée à la longueur désirée, puis qu'un produit à emballer est disposé au-dessus de l'ensemble contenant-cale et appliqué de manière à s'installer dans le contenant, la mise en place se faisant naturellement.

D'autres avantages de la présente invention seront mieux compris à l'aide de la description et des figures annexées qui sont :
- la figure 1 : un schéma d'un mode de réalisation d'une cale selon l'invention,
- la figure 2 : un schéma d'une partie d'une chaîne de transfert mettant en oeuvre la cale et le dérouleur de cale selon l'invention,
- la figure 3 : une vue en cours d'un emballage, produit et cale installés selon l'invention,
- les figures 4a et b : un schéma d'un moyen de stockage selon l'invention,
- la figure 5a et b : un schéma d'un autre moyen de stockage selon l'invention,
- la figure 6 : un ensemble de formes possibles de cales selon l'invention,
- la figure 7 : un schéma vu en coupe d'un autre moyen de stockage selon l'invention.

Dans le texte, le terme de caisse est utilisé de manière équivalente à celui d'emballage et celui plus générique, de contenant. En particulier dans un mode préféré de réalisation, on vise les caisses en carton préformé.

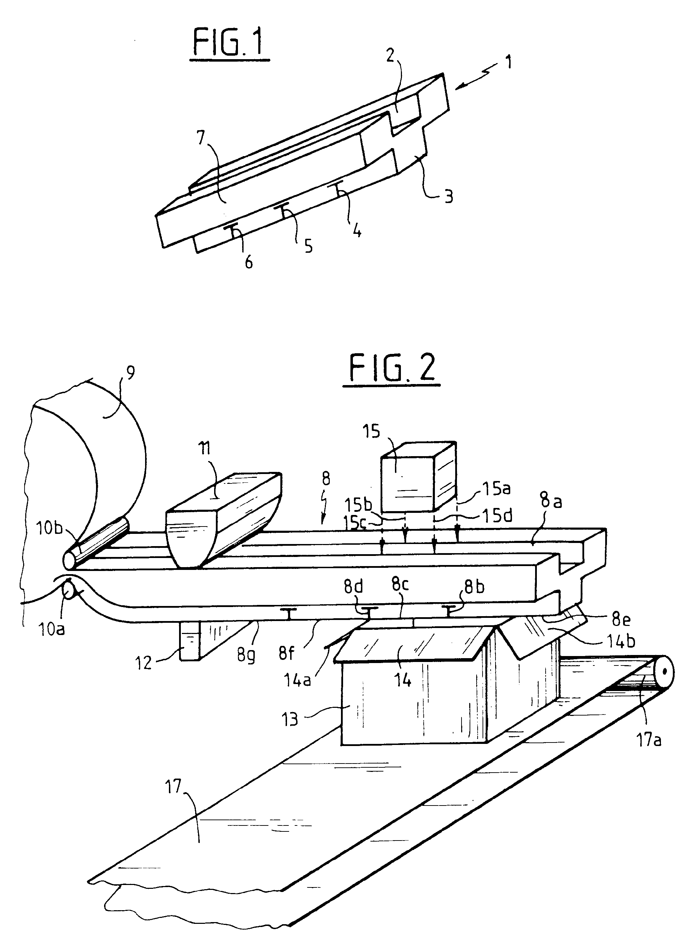

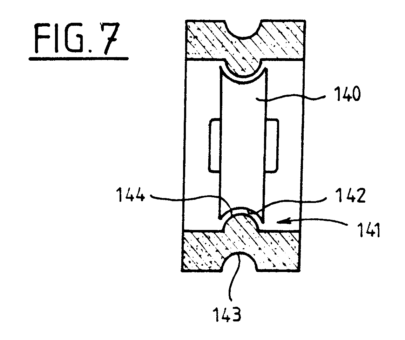

A la figure 1, on a représenté un mode de réalisation d'une cale selon l'invention. Une telle cale est réalisée sous forme d'un ruban allongé destiné à entourer le produit à emballer. Dans un mode préféré de réalisation, afin de produire un effet de maintien latéral, le ruban 1 est creusé, dans une zone de réception du produit à emballer, d'une gorge 2, le flanc 7 visible étant destiné à venir appuyer sur les parois latérales d'une caisse ou contenant. Dans un mode de réalisation représenté à la figure 7, la face 142 du produit destinée à venir en contact avec la zone de réception 141 de la cale est de forme creuse. Il s'en suit que la zone de réception 141 de la cale doit être en contreforme 143 de cette face 142 du produit de façon à constituer un moyen de retenue convenable. De même, la contreforme 143 prévue sur la face inférieure de la cale est adaptée à la forme 144 de la zone de réception.

Pour permettre un stockage amélioré et un bon calage dans le contenant, le bas du ruban est prolongé d'une contreforme 3 qui est apte à s'encastrer parfaitement dans la gorge 2. De cette façon, les cales selon ce mode de réalisation, peuvent être empilées sans perte de place tout en constituant ainsi des empilements stables dans les ateliers d'emballage. Les cales, une fois coupées, peuvent être stockées dans un conteneur dont le couvercle exerce une pression diminuant leur volume, si elles sont empilées.

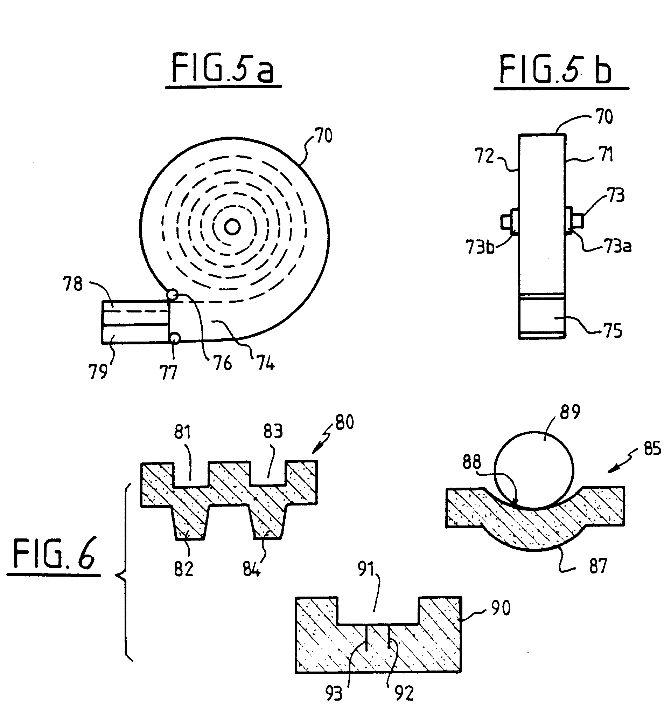

Un stockage de ce type est représenté aux figures 6a et 6b. Un conteneur 50 est réalisé en tôle avec une ouverture vers le sommet. Le conteneur 50 comporte un fond à partir duquel on entasse les câles coupées aux dimensions requises. On remarque que la première câle 57 déposée au fond est écrasée dans son domaine de flexion élastique et que la gorge 57a reçoit la contreforme 58a de la câle suivante 58.

Le conteneur 50 reçoit les câles en plusieurs volumes limités par des plaques 53-55. Ces plaques sont disposées de manière à comprimer les câles déjà stockées, la paroi interne comportant des moyens de fixation 59 par encliquetage qui permettent de maintenir la pression sur le volume stocké même pendant le chargement/déchargement du volume suivant.

Enfin, un couvercle de l'ouverture supérieur permet de comprimer le dernier volume de câles stockées et de conserver ainsi sous un volume réduit un nombre important de câles prêtes à l'emploi.

Dans un mode de réalisation préférée, la matière dans laquelle est réalisée la câle est un dérivé du polyuréthane et le taux de compression en volume atteint 80%.

Dans un mode préféré d'exécution de la présente invention, le stockage des câles est effectué avant la découpe des câles aux dimension désirées. Au contraire du mode de stockage précédent, la bande est stockée en rouleau et comprimée de façon à réduire encore l'encombrement. A la figure 7, on a représenté un mode de réalisation préféré d'un conteneur de câle en bande avant l'opération de câlage des produits à emballer.

A la figure 5b, le conteneur est composé de deux flasques latéraux 71 et 72 à travers lesquels passe un axe 73 monté sur des paliers 73a et 73b. L'axe 73 porte à l'intérieur du volume limité par les deux flasques 71 et 72 un moyen d'accrochage du ruban 74. Le ruban 74 dessiné à la figure 7a est enroulé en spires jointives, la contreforme 3 s'encastrant dans la gorge 2 de la câle dessinée à la figure 1. Afin de permettre le chargement du conteneur, l'un des flasques 71 ou 72 est amovible. Une extrémité du ruban "câle" est introduite à travers les rouleaux de compression 76 et 77 et tirée jusqu'à l'engagement dans les moyens de fixation de l'axe 73.

Dans un mode de réalisation préféré, les deux flasques sont réunies par une forme circulaire solide destinée à conserver comprimée la bande enroulée à l'intérieur de son conteneur. Une telle forme est réalisée par une tôle d'acier de forme générale cylindrique dont les couvercles sont les flasques 71, 72.

En phase de dévidage, le bas du conteneur comporte une ouverture 75 à travers laquelle se tire une longueur désirée de câle sous forme ruban. La distribution est assurée par deux rouleaux 76 et 77 qui évitent que le ruban s'expanse trop avant sa sortie du conteneur 70.

Pour une meilleure compréhension de l'invention, on a représenté l'extrémité libre du ruban qui servira de câle une fois coupée à la longueur désirée. Elle comporte la gorge 78 et la contreforme 79. D'une manière générale, une câle selon l'invention est toujours telle que sa coupe transversale est dotée de parties de retenue du produit. Ces parties sont dans la direction perpendiculaire au plan dans lequel on voit la longueur de câle.

En revenant à la figure 1, dans un mode préféré de réalisation selon l'invention, on remarque que la partie basse de la câle destinée à venir en contact direct avec les parois de l'emballage, est munie de trois découpes 4-6 destinées à améliorer la flexion de la câle qui doit se plier autour du produit à emballer. Ces découpes sont obtenues à chaud par découpe avec un tranchet pour les câles polyuréthane. Dans d'autres matériaux, elles sont pratiquées par moulage.

Dans un mode de réalisation préférée, chaque découpe occupe toute la largeur disponible de la face d'appui et est en forme de té. Quand la câle est pliée au droit de la découpe, les bords verticaux de celle-ci s'écartent, évitant les déchirements dûs à un déplacement trop important de la matière à cet endroit. Par contre, la partie horizontale du té se déforme en arc réalisant charnière.

A la figure 2, on a représenté une chaîne d'emballage entièrement automatisable avec les moyens de l'invention. La câle est stockée dans son conteneur 9 et une longeur 8 est tirée de façon à venir se placer au-dessus de la zone de conditionnement. Des moyens 11-12 de découpe du ruban sont disposés de façon à adapter automatiquement la longueur de câle extraite du conteneur 9 aux besoins de la caisse et du produit qui se présentent dans la zone de conditionnement. Dans un mode de réalisation, les moyens de découpe comportent un ciseau 11 motorisé et une enclume 12 sur laquelle s'applique la base du ruban.

Dans la zone de conditionnement, un tapis roulant amène une caisse 13 qu'un automate, non représenté mais à la portée des moyens techniques de l'homme de métier, maintient ouverte par ses rabats 14. La caisse 13 repose par gravité sur le tapis roulant et son ouverture est dirigée vers le haut.

Au-dessus d'elle, la câle est disposée de telle sorte qu'elle est prête à entrer en bonne position dans la caisse sans manipulation supplémentaire. Au-dessus de l'ensemble, transporté par un autre moyen de transfert non représenté mais réalisable par l'homme de métier, est amené un produit 15 de forme généralement parallélépipédique. Il est déposé par gravité dans la gorge 8a dans la direction des flèches dessinées 15a-15d.

La dépose peut être guidée par le robot de manipulation de façon à améliorer le rendement de la chaîne relativement au cas où la seule gravité est exploitée pour faire se placer le produit dans le contenant.

Dans le cas d'un produit présentant un élément de symétrie, les plans définis par les droites 15b, 15c d'une part et 15d, 5a d'autre part, coupent la câle entre les charnières 8b et 8d, elles-même étant de directions passant à l'intérieur de la caisse 13.

De cette façon, la dépose du produit dans la gorge 8a de la câle 8 installe le produit dans la câle, et enfonce l'ensemble à l'intérieur de la caisse sans nécessiter de centrage supplémentaire.

En fin de dépose, la face 8c de la câle est appliquée contre le fond de la caisse 13 et les faces 8e et 8f sont appliquées contre les trois parois latérales de la caisse 13 maintenue ouverte. La face 8g de la câle est encore verticale, mais la câle ayant libérée la zone de conditionnement, un robot peut manipuler le rabat 14a puis le rabat 14b de façon à appliquer fortement la face supérieure du produit dans la gorge continue 8a de partie libre de la câle.

A la fin du procédé, on déroule le tapis 17 qui éloigne la caisse chargée 13 vers des moyens de ligature non représentés. Enfin, une nouvelle longueur de ruban est extraite du conteneur 9 et une caisse vide est approchée.

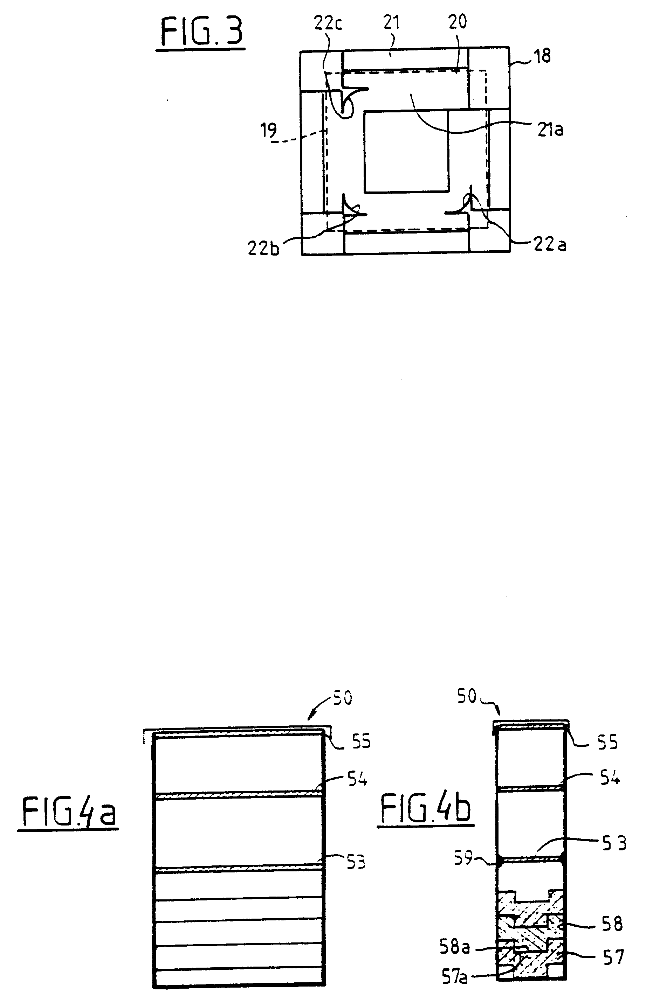

Dans un autre mode de réalisation, la caisse ou contenant est amenée sous forme non constituée, comme une caisse en carton à plat ou un film plastique thermorétractable. Cette forme de réalisation applicable à tout élément d'emballage, comme un carton à plat ou une feuille de résine synthétique thermoformable, montre que l'on sait pousser encore plus loin l'automatisation du procédé d'emballage. A la figure 3, on a représenté en coupe verticale, une caisse fermée contenant un produit conditionné avec la cale et selon le procédé de l'invention. La caisse 18 est fermée et la cale 21 entoure complètement le produit 19. On voit la gorge 21a qui permet ici un maintien latéral dans la direction perpendiculaire au plan de la figure.

Les charnières sont au nombre de 3 : 22 a, b, c. On remarque qu'elles comportent une partie centrale formée en arc de forte courbure et latéralement deux bords linéaires dans la masse de la cale qui permettent d'éviter de renvoyer les tensions internes dues à la forte courbure sur les bords extrêmes de la cale.

D'autres formes de cales peuvent être imaginées de façon à permettre d'adapter l'invention à toutes sortes de conditionnement de produits simples ou multiples, de formes parallélépipèdiques ou non.

En particulier, à la figure 6, on a représenté en coupe diverses formes possibles de cales avec le produit installé ou non. La première cale 80 comporte deux gorges 81 et 83 qui répondent à des contreformes 82 et 84. Une telle cale peut recevoir deux produits côte-à-côte.
La seconde cale 85 comporte une gorge 88 de forme concave qui répond à la contreforme réciproque 87. Le produit peut alors avoir une forme concave de courbure inférieure.

La troisième forme 90 ne comporte pas de contreforme sur sa face inférieure (ce qui n'est pas exclusif cependant) mais comporte une gorge 91 dont le fond est muni de deux découpes 92 et 93 destinées à permettre à de petites aspérités du produit de se loger dans la cale sans subir une réaction trop forte de déformation.

## Revendications

1. Cale pour maintenir et protéger un produit dans son emballage, ladite cale (21) étant réalisée d'une seule pièce en matériau plastique sous forme d'une bande continue que l'on peut couper à la dimension désirée de façon à entourer au moins partiellement le produit (19) et comportant tout le long de la bande de la cale une gorge (8a) en forme de U destinée à recevoir et à maintenir le produit.

2. Cale selon la revendication 1, caractérisée en ce que la face d'appui opposée à la face de la cale portant la gorge (8a) est en contreforme de cette face supérieure de façon à permettre un empilement amélioré des cales au stockage.

3. Cale selon la revendication 1, caractérisée en ce qu'elle est constituée sous forme d'une bande continue dont la partie basse destinée à venir en appui sur les parois internes de l'emballage (13) porte des moyens de pivotement facilitant son pliage lors de l'entourage du produit.

4. Cale selon la revendication 3, caractérisée en ce que les moyens de pivotement sont constitués par des découpes (4-6) en pleine masse pratiquées depuis la face d'appui (3).

5. Cale selon la revendication 4, caractérisée en ce que chaque découpe est réalisée sur toute la largeur disponible de la cale et qu'elle affecte la forme d'un té.

6. Cale selon l'une des revendications précédentes, caractérisée en ce que la gorge (91) comporte des moyens (92, 93) destinés à recevoir des aspérités fragiles du produit en contact avec la cale (90).

7. Cale selon l'une des revendications 2 à 6, caractérisée en ce que la contreforme (3) lorsqu'elle existe est constituée tout le long de la cale (7).

8. Conteneur destiné à recevoir une cale en continu selon l'une des revendications 1 à 7 comportant un axe mobile (73) entre deux flasques (71, 72), les deux flasques, dont au moins l'un est amovible, étant assemblés par une forme circulaire solide destinée à conserver comprimée la bande enroulée et le conteneur comportant des moyens de compression et de déroulement de la cale à la demande, constituées de deux rouleaux de compression (76, 77), permettant d'une part de comprimer ladite cale lors de son introduction dans ledit conteneur cette dernière étant alors tirée jusqu'à l'engagement dans des moyens de fixation de l'axe mobile (73) puis enroulée autour dudit axe mobile et d'autre part de maintenir la cale comprimée lors du déroulement de cette dernière à la demande évitant à celle-ci de se détendre avant sa sortie du conteneur.

9. Conteneur destiné à recevoir un ensemble de cales découpées prêtes à l'emploi selon l'une des revendications 1 à 7, comportant plusieurs secteurs remplis de cales comprimées, maintenues en cet état par des couvercles (53-55) fixés par des fixations ( 59).

10. Procédé d'emballage de produits utilisant une cale selon l'une des revendications 1 à 7 consistant :
- à amener dans une zone de conditionnement une cale de longueur déterminée,
- à amener un produit (15) à emballer au-dessus d'une région de réception (8a) de la cale,
- à amener dans la zone de conditionnement, et sous la cale, un élément d'emballage (13) destiné à recevoir le produit dans sa cale,
- à installer le produit dans la zone de réception (8a) de la cale et l'ensemble cale-produit dans l'élément l'emballage (13),
- enfin à fermer (14, 14a) l'élément d'emballage (13).

## Patentansprüche

1. Verpackungseinlage zum Halten und Schützen eines Erzeugnisses in seiner Verpackung, wobei diese Einlage (21) einteilig aus Kunststoffmaterial in Form eines kontinuierlichen Streifens ausgebildet ist, der auf die gewünschte Abmessung geschnitten werden kann, um das Erzeugnis (19) wenigstens teilweise zu umgeben, wobei längs des gesamten Streifens der Einlage eine U-förmige Nut (8a) gebildet ist, die zur Aufnahme und zum Halten des Erzeugnisses bestimmt ist.

2. Einlage nach Anspruch 1, dadurch gekennzeichnet, daß die Stützfläche, die von derjenigen Fläche der Einlage abgewandt ist, welche mit der Nut (8a) versehen ist, komplementär zu dieser oberen Fläche ausgebildet ist, so daß die Einlagen bei der Lagerung besser gestapelt werden können.

3. Einlage nach Anspruch 1, dadurch gekennzeichnet, daß sie in Form eines durchgehenden Streifens ausgebildet ist, dessen unterer Teil, welcher zur Anlage an den Innenwandungen der Verpackung (13) bestimmt ist, Schwenkmittel trägt, die das Biegen der Einlage beim Einhüllen des Erzeugnisses erleichtern.

4. Einlage nach Anspruch 3, dadurch gekennzeichnet, daß die Schwenkmittel durch Einschnitte (4-6) von der Stützfläche (3) ausgehend in die Masse gebildet sind.

5. Einlage nach Anspruch 4, dadurch gekennzeichnet, daß jeder Einschnitt über die gesamte verfügbare Breite der Einlage in T-Form ausgeführt ist.

6. Einlage nach einem der vorstehenden Ansprüche, dadurch gekennzeichnet, daß die Nut (91) Mittel (92, 93) aufweist, die dazu bestimmt sind, die mit der Einlage (90) in Berührung kommenden, empfindlichen und vorspringenden Teile des Erzeugnisses aufzunehmen.

7. Einlage nach einem der Ansprüche 2 bis 6, dadurch gekennzeichnet, daß die Komplementärform (3), falls sie vorhanden ist, sich über die gesamte Länge der Einlage (7) erstreckt.

8. Behälter zur Aufnahme einer durchgehenden Einlage nach einem der Ansprüche 1 bis 7, mit einer beweglichen Achse (73) zwischen zwei Flanschen (71, 72), wobei diese beiden Flansche, wovon wenigstens einer entfernbar ist, mittels einer kreisrunden festen Form zusammengesetzt sind, die dazu bestimmt ist, den aufgewickelten Streifen zusammengedrückt zu halten, wobei der Behälter Mittel zum Zusammendrücken und zum Abrollen der Einlage nach Bedarf aufweist, die durch zwei Druckrollen (76, 77) gebildet sind, welche einerseits das Zusammendrücken der Einlage bei ihrer Einführung in den Behälter ermöglichen, wobei die Einlage eingezogen wird, bis sie in den Mitteln zur Festlegung der beweglichen Achse (73) in Eingriff kommt und dann auf dieser beweglichen Achse aufgerollt wird, und andererseits das Halten der Einlage im zusammengedrückten Zustand ermöglichen, während sie nach Bedarf abgerollt wird, unter Vermeidung einer Dehnung der Einlage vor ihrem Austreten aus dem Behälter.

9. Behälter zur Aufnahme einer Menge von Einlagen nach einem der Ansprüche 1 bis 7 im geschnittenen und gebrauchsfertigen Zustand, mit mehreren Sektoren, die mit zusammengedrückten Einlagen angefüllt sind, welche in diesem Zustand durch Dekkel (53-55) gehalten werden, die durch Befestigungen (59) festgelegt sind.

10. Verfahren zum Verpacken von Erzeugnissen unter Verwendung einer Einlage nach einem der Ansprüche 1 bis 7, bei welchem:
- eine Einlage von vorbestimmter Länge in eine Verpackungszone gebracht wird,
- ein zu verpackendes Erzeugnis (15) über einen Aufnahmebereich (8a) der Einlage gebracht wird,
- in die Verpackungszone und unter die Einlage ein Verpakkungselement (13) gebracht wird, das zur Aufnahme des Erzeugnisses in seiner Einlage bestimmt ist,
- das Erzeugnis in die Aufnahmezone (8a) der Einlage eingesetzt und die aus Einlage und Erzeugnis bestehende Einheit in das Verpackungselement (13) eingesetzt wird,
- schließlich das Verpackungselement (13) geschlossen (14, 14a) wird.

## Claims

1. A bolster for holding and protecting a product in a package, said bolster (21) being made of a single piece of plastic material in the form of a continuous band that can be cut to the desired dimension in such a manner as to at least partially surround the product (19), and comprising along the entire length of the bolster a U-shaped groove (8a) intended to receive and hold the product.

2. A bolster according to claim 1, characterized in that the contact face opposite the face of the bolster carrying the groove (8a) is of a mating shape of this upper face, in such a way as to permit improved stacking of the bolsters in storage.

3. A bolster according to claim 1, characterized in that it is in the form of a continuous band, the lower portion of which intended to come into contact with the inside walls of the package (13) carries pivoting means facilitating its folding at the time of the surrounding of the product.

4. A bolster according to claim 3, characterized in that the pivoting means comprise slits (4-6) made in the solid material from the contact face (3).

5. A bolster according to claim 4, characterized in that each slit is made over the entire available width of the bolster, and that it takes the form of a capital T.

6. A bolster according to any one of the preceding claims, characterized in that the groove (91) includes means (92,93) intended for receiving fragile unevenness of the product in contact with the bolster (90).

7. A bolster according to any one of claims 2 to 6, characterized in that mating shape (3) when it exists is constituted along the entire length of the bolster (7).

8. A container intended to receive a continuous bolster according to one of claims 1 to 7 comprising a shaft (73) movable between two end plates (71,72), the two plates, of which at least one is removable, being joined by a solid circular form intended to keep the rolled-up band compressed, the container comprising means for compressing and unrolling the bolster as required, constituted by two compression rollers (76,77), allowing on the one hand compression of the bolster at the time of its introduction in the container this latter being then pulled to engagement in fixing means of the movable shaft (73) then rolled around said movable shaft and on the other hand holding the compressed bolster at the time of its unrolling as required avoiding it expanding before it leaves the container.

9. A container intended to receive a group of ready cut bolsters according to one of claims 1 to 7, including a plurality of sectors filled with compressed bolsters, which are kept in this state by lids (53 to 55) fixed by fixing means (59).

10. A method of packaging products using a bolster according to one of claims 1 to 7, comprising:-
- placing a bolster of predetermined length in a packing zone;
- placing a product (15) to be packaged above a reception region (8a) of the bolster;
- placing a packaging element (13) intended to receive the product in its bolster in the packing zone and beneath the bolster;
- installing the product in the reception zone (8a) of the bolster and installing the bolster and product assembly in the packaging element (13);
- finally, closing (14,14a) the packaging element (13).
